# EUROPÄISCHE PATENTANMELDUNG

(11) **EP 1 544 572 A2**
(43) Veröffentlichungstag der Anmeldung: **22.06.2005**
(21) Anmeldenummer: 04027606.5
(22) Anmeldetag: 20.11.2004
(51) Int. Cl.: G01B 11/14, G01C 7/06, B61K 9/02

(54) **Vorrichtung zum berührungslosen Erfassen von Abständen zu Gegenständen**

(30) Priorität: 18.12.2003 DE 10359710
(71) Anmelder: FRAUNHOFER-GESELLSCHAFT ZUR FÖRDERUNG DER ANGEWANDTEN FORSCHUNG E.V., 80686 München (DE)
(72) Erfinder: Höfler, Heinrich, 79331 Teningen (DE); Blug, Andreas, 79102 Freiburg (DE); Seib, Michael, 79102 Freiburg (DE)
(74) Vertreter: RACKETTE Partnerschaft Patentanwälte

(57) **Zusammenfassung**

Bei einer Vorrichtung zum berührungslosen Erfassen von Abständen zu Gegenständen neben einer Gleisanlage (4) ist ein Wegsignalgeber (19), wenigstens eine Abstandsmesseinheit (14, 15, 16, 17), eine Neigungsmesseinheit (18) und eine Recheneinheit (13) vorhanden, mit der auf der Grundlage eines Wegsignals, wenigstens eines Abstandssignals und eines Neigungssignals für einen zurückgelegten Weg ein Abstandsprofil erzeugbar. Erfindungsgemäß sind eine Referenzlagenmesseinheit (20) vorhanden, mit der wenigstens ein für die Lage der oder jeder Abstandsmesseinheit (14, 15, 16, 17) in Bezug auf eine schienengebundene Referenzlage charakteristisches Referenzlagensignal erzeugbar ist, und ein Korrekturmodul vorhanden, mit dem das oder jedes Abstandssignal mit dem oder jedem Referenzlagensignal zu einem zugehörigen schienenbezogenen Referenzabstandssignal umrechenbar ist. Dadurch ist die Genauigkeit bei der Abstandsmessung verbessert, und die Abstandswerte sind in verschiedenen Koordinatensystemen bestimmbar.

## Beschreibung

Die Erfindung betrifft eine Vorrichtung zum berührungslosen Erfassen von Abständen zu Gegenständen, die seitlich einer Schienen aufweisenden Gleisanlage angeordnet sind, mit einem Wegsignalgeber zum Erzeugen eines für einen zurückgelegten Weg charakteristischen Wegsignals, mit wenigstens einer Abstandsmesseinheit zum Erzeugen eines für den seitlichen Abstand der oder jeder Abstandsmesseinheit zu Gegenständen charakteristischen Abstandssignals, mit einer Neigungsmesseinheit zum Erzeugen eines von für die Neigung der oder jeder Abstandsmesseinheit gegenüber der Schwerkraft charakteristischen Neigungssignals und mit einer Recheneinheit, mit der auf der Grundlage des Wegsignals, des oder jedes Abstandssignals und des Neigungssignals für einen zurückgelegten Weg ein Abstandsprofil erzeugbar ist.

Eine derartige Vorrichtung ist aus der DE 196 46 830 C1 bekannt. Die zum berührungslosen Erfassen von Abständen zu Gegenständen, die seitlich von Schienen aufweisenden Gleisanlagen angeordnet sind, ausgelegte vorbekannte Vorrichtung verfügt über einen Wegsignalgeber zum Erzeugen eines für einen zurückgelegten Weg charakteristischen Wegsignals. Weiterhin sind einseitig oder beidseitig eines Waggonkastens arbeitende Abstandsmesseinheiten vorhanden, mit denen Abstandssignale generierbar sind, die für den seitlichen Abstand die jeweiligen Abstandsmesseinheit von einem Gegenstand charakteristisch sind. Zur Korrektur der Neigung eines Waggonkastens, an dem die Vorrichtung angebracht ist, und damit zur Korrektur der Neigung der Abstandsmesseinheiten ist eine Neigungsmesseinheit vorgesehen, mit der die Neigung der Abstandsmesseinheiten gegenüber der Schwerkraft bestimmbar und über Neigungssignale ausgebbar ist. Mit einer Recheneinheit sind auf der Grundlage des Wegsignals, der Abstandssignale und des Neigungssignals die seitlichen Abstände von Gegenständen und insbesondere von Masten zu dem Waggonkasten bestimmbar. Bei einer Ausführung der vorbekannten Vorrichtung sind durch Kombination von Abstandssignalen von in verschiedenen Höhen angeordneten, auf die gleiche Seite messenden Abstandsmesseinheiten die Neigungen insbesondere von Masten gegenüber der Schwerkraft bestimmbar.

Der Erfindung liegt die Aufgabe zugrunde, eine Vorrichtung der eingangs genannten Art anzugeben, die sich durch eine verbesserte Genauigkeit bei der Abstandsmessung in verschiedenen Koordinatensystemen auszeichnet.

Diese Aufgabe wird bei einer Vorrichtung der eingangs genannten Art erfindungsgemäß dadurch gelöst, dass eine Referenzlagenmesseinheit vorhanden ist, mit der wenigstens ein für die Lage der oder jeder Abstandsmesseinheit in Bezug auf eine schienengebundene Referenzlage charakteristisches Referenzlagensignal erzeugbar ist, und dass ein Korrekturmodul vorhanden ist, mit dem das oder jedes Abstandssignal mit dem oder jedem Referenzlagensignal zu einem zugehörigen schienenbezogenen Referenzabstandssignal umrechenbar ist.

Dadurch, dass bei der erfindungsgemäßen Vorrichtung eine Referenzlagenmesseinheit vorhanden ist, mit der das oder jedes Abstandssignal in einem schienenbezogenen Koordinatensystem bestimmbar sind, lassen sich die bei Anbringen der Vorrichtung an einem Waggonkasten induzierten seitlichen Hin-und Herbewegungen kompensieren und das oder jedes Abstandssignal auf eine beispielsweise auf die Flanke eines Schienenkopfes einer Schiene bezogene, seitliche Referenzlage beziehen. Weiterhin ist es möglich, neben dem Bezug des oder jedes Abstandssignals auf ein schwerkraftbezogenes Koordinatensystem und damit dem Bestimmen der Abstände in der Horizontalen das oder jedes Abstandssignal auch auf eine beispielsweise in der Ebene der Oberflächen der Schienen liegende Ebene eines schienenbezogenen Koordinatensystems liegende Richtung zu beziehen. Dadurch ist die erfindungsgemäße Vorrichtung auch bei verschiedenen Messvorschriften variabel einsetzbar.

Weitere zweckmäßige Ausgestaltungen der Erfindung sind Gegenstand der Unteransprüche.

Zweckmäßige Ausgestaltungen und Vorteile der Erfindung ergeben sich auch aus der nachfolgenden Beschreibung eines Ausführungsbeispiels unter Bezug auf die Figuren der Zeichnung. Es zeigen:
- Fig. 1: in einer schematischen Ansicht ein Ausführungsbeispiel einer erfindungsgemäßen Vorrichtung, die in einen Eisenbahnwaggon eingebaut ist,
- Fig. 2: in einer schematischen Darstellung die Ausrichtung eines Laserliniengenerators und einer Flächenkamera auf eine Schiene,
- Fig. 3: von einer linksseitigen Flächenkamera und einer rechtsseitigen Flächenkamera aufgenommene Schnittlinienbilder mit charakteristischen Referenzlagen,
- Fig. 4: in einer schematischen Darstellung die Zusammenhänge zwischen einem Schienenkoordinatensystem und einem Waggonkoordinatensystem,
- Fig. 5 und Fig. 6: in anschaulichen Darstellungen eine typische Konstellation von seitlich einer Gleisanlage angeordneten Gegenständen mit zugehörigen Signalverläufen bei der erfindungsgemäßen Vorrichtung gemäß Fig. 1 und
- Fig. 7: in einem Blockschaubild den weiteren messund datentechnischen Aufbau der erfindungsgemäßen Vorrichtung gemäß Fig. 1.

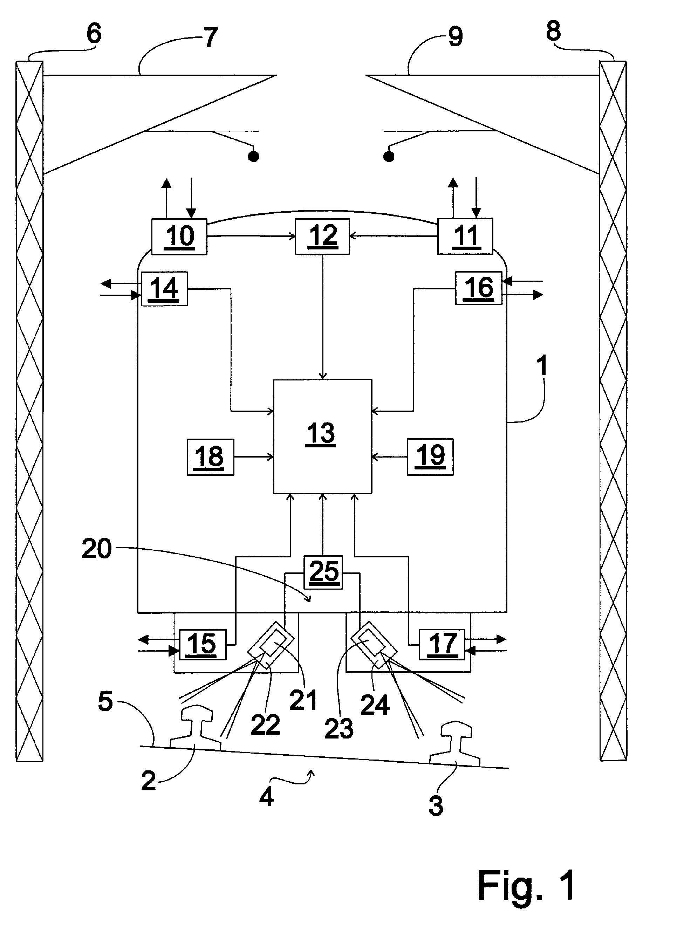

Fig. 1 zeigt in einer schematischen Ansicht ein Ausführungsbeispiel einer erfindungsgemäßen Vorrichtung, die mit einem Waggonkasten 1 eines Eisenbahnwaggons verbunden ist. Der ein Waggondach und einem Waggonboden aufweisende Waggonkasten 1 befindet sich in der Darstellung gemäß Fig. 1 über einer ersten Schiene 2 und einer zweiten Schiene 3 einer Gleisanlage 4, die auf einer Gleisbettoberfläche 5 angeordnet sind. Seitlich neben der ersten Schiene 2 ist in der Darstellung gemäß Fig. 1 ein erster Mast 6 angeordnet, an dessen oberen Ende ein in Richtung der Gleisanlage 4 ausgerichteter erster Mastausleger 7 angebracht ist. Entsprechend ist in der Darstellung gemäß Fig. 1 seitlich neben der zweiten Schiene 3 ein zweiter Mast 8 mit einem in Richtung der Gleisanlage 4 ausgerichteten zweiten Mastausleger 9 angeordnet.

Zum Detektieren des ersten Mastauslegers 7 und des zweiten Mastauslegers 9 verfügt die erfindungsgemäße Vorrichtung gemäß Fig. 1 über eine erste Mastauslegerdetektionseinheit 10 und eine zweite Mastauslegerdetektionseinheit 11 einer Mastenauslegerdetektionsanordnung, die auf dem Dach des Waggonkastens 1 angeordnet sind. Mit den Mastauslegerdetektionseinheiten 10, 11 ist elektromagnetische Strahlung in Richtung der Mastausleger 7, 9 aussendbar und ein Teil der von Mastauslegern 7, 9 rückgeworfenen Strahlung erfassbar. Dadurch ist detektierbar, ob an einer bestimmten Position ein Mastausleger 7, 9 vorhanden ist oder nicht.

Die für das Vorhandensein beziehungsweise das Nichtvorhandensein charakteristischen Ausgangssignale der Mastauslegerdetektionseinheiten 10, 11 sind einem Mastenanordnungssignalgenerator 12 der Mastenauslegerdetektionsanordnung einspeisbar, mit dem in Abhängigkeit der eingespeisten Ausgangssignale der Mastauslegerdetektionseinheiten 10, 11 ein Mastenanordnungssignal generierbar ist, dessen Pegel für die vier verschiedenen Möglichkeiten des Vorhandenseins beziehungsweise Nichtvorhandenseins von Mastauslegern 7, 9, nämlich überhaupt kein Mastausleger 7, 9, lediglich ein erster Mastausleger 7 seitlich neben der ersten Schiene 2, lediglich ein zweiter Mastausleger 9 seitlich neben der zweiten Schiene 3 oder zwei Mastausleger 7, 9, charakteristisch ist. Das Mastenanordnungssignal ist einer Recheneinheit 13 einspeisbar.

Weiterhin verfügt die erfindungsgemäße Vorrichtung gemäß Fig. 1 über eine bei dem dargestellten Ausführungsbeispiel nahe des Waggondaches angeordnete erste obere Abstandsmesseinheit 14 und über eine bei dem dargestellten Ausführungsbeispiel zwischen dem Waggonboden und der Gleisanlage 4 angeordnete erste untere Abstandsmesseinheit 15, die fest mit dem Waggonkasten 1 verbunden sind und mit denen zum Bestimmen des jeweiligen Abstandes von dem ersten Mast 6 in an sich bekannter Art und Weise beispielsweise auf der Grundlage von Phasenmessungen oder Laufzeitmessungen intensitätsmodulierte Strahlung aussendbar sowie rückgeworfene Anteile der ausgesendeten Strahlung empfangbar sind. Entsprechend sind zum Bestimmen des Abstandes des zweiten Mastes 8 in entsprechender Höhe eine zweite obere Abstandsmesseinheit 16 und eine zweite untere Abstandsmesseinheit 17 vorhanden. Die für die jeweiligen Abstände der Masten 6, 8 zu den Abstandsmesseinheiten 14, 15, 16, 17 charakteristischen Abstandssignale sind der Recheneinheit 13 einspeisbar.

Weiterhin verfügt die erfindungsgemäße Vorrichtung gemäß dem dargestellten Ausführungsbeispiel über eine fest mit dem Waggonkasten 1 verbundene Neigungsmesseinheit 18, mit der die Neigung des Waggonkastens 1 gegenüber der Schwerkraft detektierbar ist. Das für die Neigung des Waggonkastens 1 charakteristische Ausgangssignal der Neigungsmesseinheit 18 ist der Recheneinheit 13 als Neigungssignal einspeisbar.

Die erfindungsgemäße Vorrichtung ist weiterhin mit einem Wegsignalgeber 19 ausgestattet, mit dem ein für einen zurückgelegten Weg charakteristisches Wegsignal erzeugbar und der Recheneinheit 13 einspeisbar ist.

Schließlich ist Fig. 1 zu entnehmen, dass die erfindungsgemäße Vorrichtung über eine Referenzlagenmesseinheit 20 verfügt, die einen ersten Laserliniengenerator 21 und eine erste Flächenkamera 22 aufweist, die in Richtung der ersten Schiene 2 ausgerichtet sind. Weiterhin ist die Referenzlagenmesseinheit 20 mit einem zweiten Laserliniengenerator 23 sowie einer zweiten Flächenkamera 24 ausgestattet, die in Richtung der zweiten Schiene 3 ausgerichtet sind. Die Laserliniengeneratoren 21, 23 verfügen jeweils über einen Laser und sind zum Aussenden der Laserstrahlung in einer Ebene eingerichtet. Die Flächenkameras 22, 24 sind zum ortaufgelösten Erfassen von Bildern wenigstens in dem Spektralbereich der in den Laserliniengeneratoren 21, 23 verwendeten Lasern eingerichtet. Die Ausgangssignale der Flächenkameras 22, 24 sind über ein weiter unten näher erläutertes Schnittlinienbildauswertemodul 25 der Referenzlagenmesseinheit 20 ebenfalls der Recheneinheit 13 einspeisbar.

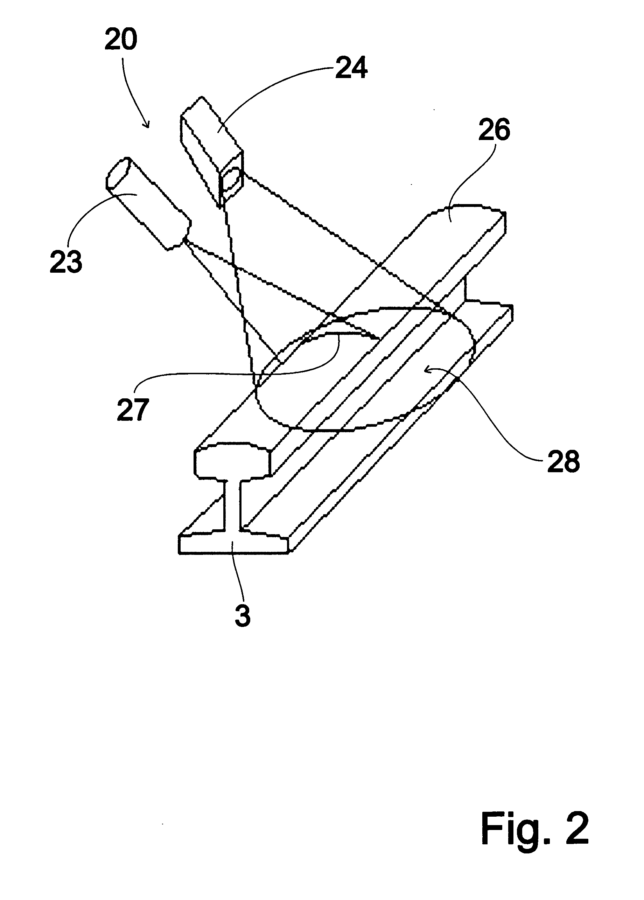

Fig. 2 zeigt in einer schematischen Darstellung die Ausrichtung eines Laserliniengenerators, beispielsweise des zweiten Laserliniengenerators 23, und einer Flächenkamera, beispielsweise der zweiten Flächenkamera 24, auf eine Schiene, die in dem beispielhaft dargestellten Fall die zweite Schiene 3 ist. Wie aus Fig. 2 ersichtlich ist mit dem zweiten Laserliniengenerator 23 auf einem Schienenkopf 26 der zweiten Schiene 3 eine Laserlinie 27 erzeugbar. Das Gesichtsfeld 28 der zweiten Flächenkamera 24 ist so ausgerichtet, dass die Laserlinie 27 auf der Oberseite und einer innenseitigen, der ersten Schiene 2 zugewandten Flanke des Schienenkopfes 26 der zweiten Schiene 3 als Schnittlinienbild detektierbar ist.

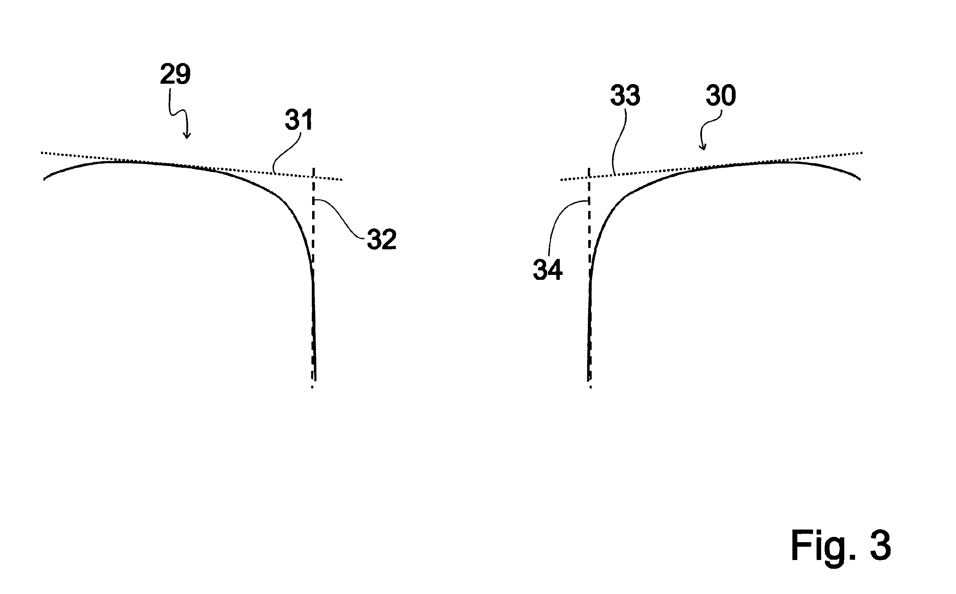

Fig. 3 zeigt von der linksseitigen ersten Flächenkamera 23 und der rechtsseitigen zweiten Flächenkamera 25 aufgenommene Schnittlinienbilder 29, 30. Bei dem der ersten Schiene 2 zugeordneten ersten Schnittlinienbild 29 sind jeweils durch gestrichelte Linien eine erste Referenzhöhenlage 31 und eine erste Referenzseitenlage 32 angedeutet, die für die Höhenlage der Scheitellinie beziehungsweise die Seitenlage der innenseitigen Flanke des Schienenkopfes 26 der ersten Schiene 2 charakteristisch sind. Bei dem der zweiten Schiene 3 zugeordneten zweiten Schnittlinienbild 30 sind entsprechend jeweils durch gestrichelte Linien eine zweite Referenzhöhenlage 33 und eine zweite Referenzseitenlage 34 angedeutet, die für die Höhenlage der Scheitellinie beziehungsweise die Seitenlage der innenseitigen Flanke des Schienenkopfes 26 der zweiten Schiene 3 charakteristisch sind. Mit der Referenzlagenmesseinheit 20 ist ein den jeweiligen Referenzhöhenlagen 31, 33 und Referenzseitenlagen 32, 34 zugeordnetes Referenzlagensignal generierbar.

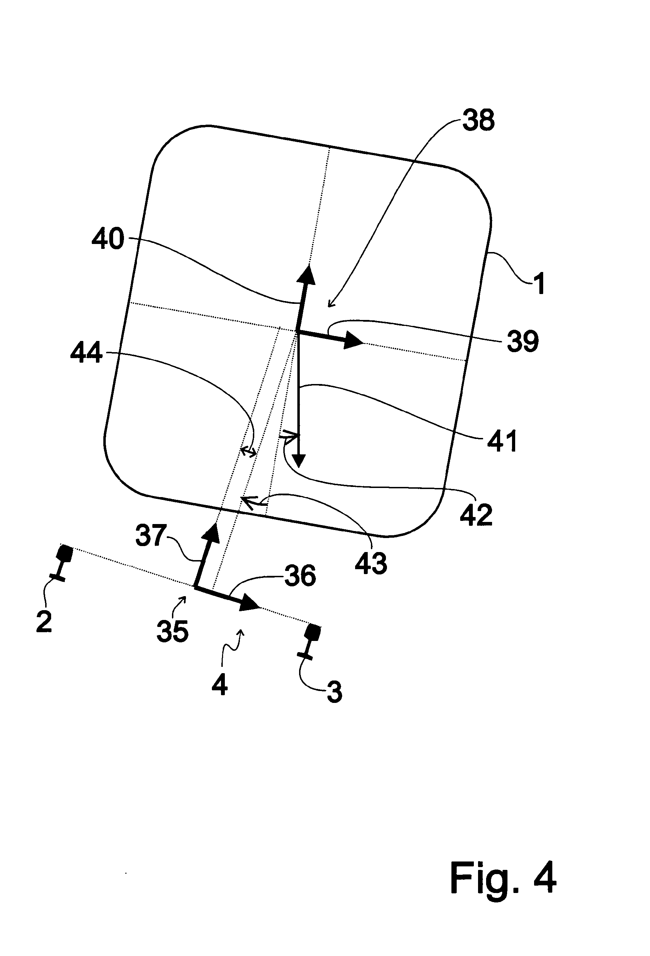

Fig. 4 zeigt in einer schematischen Darstellung die Zusammenhänge zwischen einem hier rechtwinkligen Schienenkoordinatensystem 35 mit einer ersten Komponente 36 in der Ebene der Scheitellinien der Schienen 2, 3 sowie einer zweiten Komponente 37 rechtwinklig zu der Ebene der Scheitellinien der Schienen 2, 3 und einem rechtwinkligen Waggonkoordinatensystem 38 mit einer ersten Komponente 39 beispielsweise parallel zu dem Waggonboden sowie einer zu der ersten Komponente 39 rechtwinkligen zweiten Komponente 40. Ein Pfeil 41 stellt die Richtung der Schwerkraft dar. In der Darstellung gemäß Fig. 4 befindet sich der Ursprung des Schienenkoordinatensystems 35 in der Mitte zwischen den Referenzseitenlagen 32, 34 in der Ebene der Scheitellinien der Schienen 2, 3, während der Ursprung des Waggonkoordinatensystems 38 in der Mitte des Waggonkastens 1 liegt.

Die Neigung des Waggonkastens 1 gegenüber der Schwerkraft ist durch einen Schwerkraftneigungswinkel 42 charakterisiert. Die Neigung des Waggonkastens 1 gegenüber der zweiten Komponente 37 des Schienenkoordinatensystems 35 ist durch einen Gleisneigungswinkel 43 gekennzeichnet. Der relative seitliche Versatz der Ursprünge des Waggonkoordinatensystems 38 und des Schienenkoordinatensystems 35 ist durch einen Versatzweg 44 charakterisiert. Der Schwerkraftneigungswinkel 42, der Gleisneigungswinkel 43 und der Versatzweg 44 ändern sich entlang des zurückgelegten Weges und gehen in die weiter unten näher erläuterten Korrekturen der Abstandssignale ein.

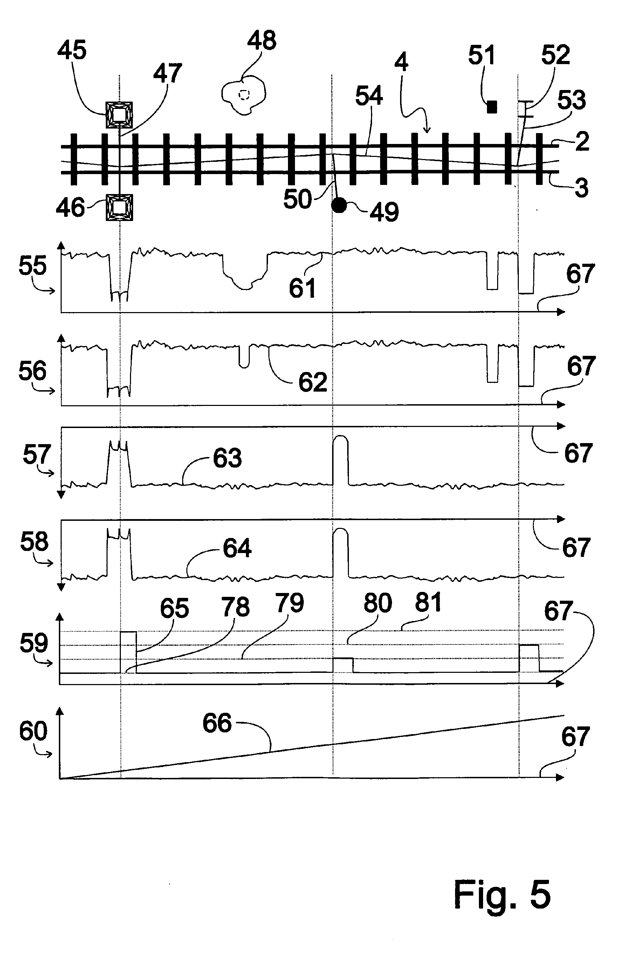

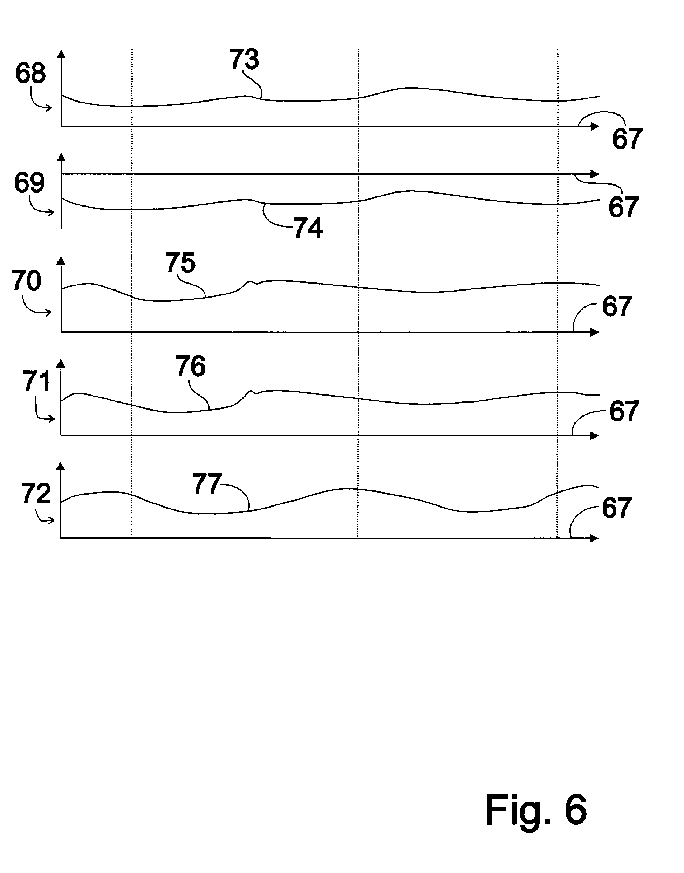

Fig. 5 und Fig. 6 zeigen in anschaulichen Darstellungen eine typische Konstellation von seitlich einer Gleisanlage 4 mit einem Gleis aus zwei Schienen 2, 3 angeordneten Gegenständen mit zugehörigen Signalverläufen bei der erfindungsgemäßen Vorrichtung gemäß Fig. 1.

Fig. 5 zeigt im obersten Teil zwei Gittermasten 45, 46, die einander gegenüberliegend angeordnet sind und zwischen denen sich ein durchgehender Mastausleger 47 erstreckt. Seitlich und in beispielhafter Bewegungsrichtung einer erfindungsgemäßen Vorrichtung in Fig. 5 von links nach rechts befindet sich links neben der ersten Schiene 2 nach den Gittermasten 45, 46 ein Baum 48. Seitlich und in der beispielhaften Bewegungsrichtung der erfindungsgemäßen Vorrichtung rechts neben der zweiten Schiene 3 ist nach dem Baum 48 ein runder Betonmast 49 mit einem rechtsseitigen Mastausleger 50 vorhanden. In Bewegungsrichtung nach dem Betonmasten 49 links sind weiterhin neben der zweiten Schiene 2 ein Signal 51 und in Bewegungsrichtung nach dem Signal 51 ein Doppel-T-Mast 52 mit einem linksseitigen Mastausleger 53 positioniert. An den Mastauslegern 47, 50, 53 ist ein Fahrtdraht 54 befestigt.

Weiterhin sind in Fig. 5 in Signalschaubildern 55, 56, 57, 58, 59, 60 weiter unten näher erläuterte Ausgangssignale 61, 62, 63, 64, 65, 66 dargestellt, die entlang eines als Ordinate abgetragenen zurückgelegten Weges 67 in relativen Einheiten abgetragen sind.

Fig. 6 zeigt entsprechend Fig. 5 in weiteren Signalschaubildern 68, 69, 70, 71, 72 weiter unten näher erläuterte weitere Ausgangssignale 73, 74, 75, 76, 77 entlang des zurückgelegten Weges 67.

Das in dem ersten Signalschaubild 55 von Fig. 5 dargestellte erste Ausgangssignal 61 zeigt das erste obere Abstandssignal der ersten oberen Abstandsmesseinheit 14 mit charakteristischen Signalamplituden an den mit punktierten Linien dargestellten Positionen des linksseitigen Gittermastes 45 sowie des Doppel-T-Mastes 52 und an den Positionen des Baumes 48 sowie des Signals 51. Entsprechend zeigt das in dem zweiten Signalschaubild 56 von Fig. 5 dargestellte zweite Ausgangssignal 62 das erste untere Abstandssignal der ersten unteren Abstandsmesseinheit 15 mit charakteristischen Signalamplituden an den mit punktierten Linien dargestellten Positionen des linksseitigen Gittermastes 45 sowie des Doppel-T-Mastes 52 und an den Positionen des Baumes 48 sowie des Signals 51.

Das in dem dritten Signalschaubild 57 von Fig. 5 dargestellte dritte Ausgangssignal 63 zeigt das zweite obere Abstandssignal der zweiten oberen Abstandsmesseinheit 16 mit charakteristischen Signalamplituden an den mit punktierten Linien dargestellten Positionen des rechtsseitigen Gittermastes 46 sowie des Betonmastes 49. Entsprechend zeigt das in dem vierten Signalschaubild 58 von Fig. 5 dargestellte vierte Ausgangssignal 64 das zweite untere Abstandssignal der zweiten unteren Abstandsmesseinheit 17 mit charakteristischen Signalamplituden an den mit punktierten Linien dargestellten Positionen des rechtsseitigen Gittermastes 46 sowie des Betonmastes 49.

Das fünfte Signalschaubild 59 von Fig. 5 stellt in dem fünften Ausgangssignal 65 das Mastenanordnungssignal des Mastenanordnungssignalgenerators 12 mit Signalamplituden an den Positionen der Gittermasten 45, 46, des Betonmastes 49 und des Doppel-T-Mastes 52 dar. Das fünfte Ausgangssignal 65 kann Signalamplituden mit insgesamt drei gegenüber einem Bezugswert 78 als Nullwert verschiedenen Amplitudenwerten 79, 80, 81 aufweisen. Der bei dem dargestellten Ausführungsbeispiel niedrigste erste Amplitudenwert 79 ist für das Vorhandensein eines rechtsseitigen Mastauslegers 50, in diesem Fall bei dem Betonmast 49, signifikant. Der mittlere zweite Amplitudenwert 80 ist für das Vorhandensein eines linksseitigen Mastauslegers 53, in diesem Fall bei dem Doppel-T-Mast 52, charakteristisch. Der höchste dritte Amplitudenwert 81 schließlich tritt bei dem Vorhandensein eines durchgehenden Mastauslegers 47 wie in dem Beispielsfall bei den Gittermasten 45, 46 auf. Durch die verschiedenen Amplitudenwerte 79, 80, 81 sind die verschiedenen Typen von Mastauslegern 47, 50, 53 eindeutig voneinander unterscheidbar.

Das sechste Signalschaubild 60 von Fig. 5 veranschaulicht in dem sechsten Ausgangssignal 66 das von dem Wegsignalgeber 19 abgegebene, dem zurückgelegten Weg 67 in dem dargestellten Fall proportionale Wegsignal.

Das siebte Signalschaubild 68 von Fig. 6 zeigt in dem siebten Ausgangssignal 73 den Verlauf des Seitenlagensignals der ersten Schiene 2. Entsprechend stellt das achte Signalschaubild 69 von Fig. 6 in dem achten Ausgangssignal 74 den Verlauf des Seitenlagensignals der zweiten Schiene 3 dar.

Das neunte Signalschaubild 70 von Fig. 6 repräsentiert in dem neunten Ausgangssignal 75 den Verlauf des Höhenlagensignals der zweiten Schiene 3. Das zehnte Signalschaubild 71 von Fig. 6 zeigt in dem zehnten Ausgangssignal 76 den Verlauf des Höhenlagensignals der zweiten Schiene 3.

Das elfte Signalschaubild von Fig. 6 schließlich repräsentiert in dem elften Ausgangssignal 77 den Verlauf des Neigungssignals der Neigungsmesseinheit 18.

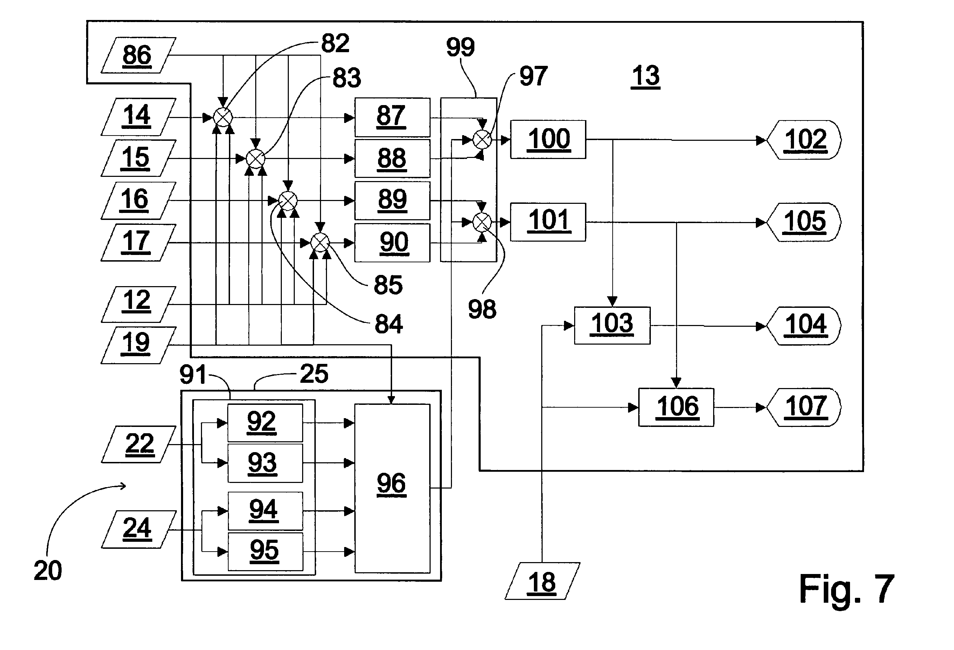

Fig. 7 zeigt in einem Blockschaubild den weiteren mess- und datentechnischen Aufbau der erfindungsgemäßen Vorrichtung gemäß Fig. 1. Die Ausgangssignale der ersten oberen Abstandsmesseinheit 14, der ersten unteren Abstandsmesseinheit 15, der zweiten oberen Abstandsmesseinheit 16 und der zweiten unteren Abstandsmesseinheit 17 sind einem ersten Datenverknüpfungsglied 82, einem zweiten Datenverknüpfungsglied 83, einem dritten Datenverknüpfungsglied 84 beziehungsweise einem vierten Datenverknüpfungsglied 85 einspeisbar. Den Datenverknüpfungsgliedern 82, 83, 84, 85 sind weiterhin das Ausgangssignal des Mastenanordnungssignalgenerators 12, das Wegsignal des Wegsignalgebers 19 sowie für die verschiedenen Masttypen charakteristische Daten aus einem Mastmusterspeicher 86 einspeisbar.

Mit den Datenverknüpfungsgliedern 82, 83, 84, 85 sind auf der Grundlage der anliegenden Ausgangssignale und Daten einer Abstandsmesseinheit 14, 15, 16, 17 zugeordnete Abstandsrohdaten generierbar, die jeweils einem einem Datenverknüpfungsglied 82, 83, 84, 85 nachgeordneten ersten Abstandsdatenvorspeicher 87, einem zweiten Abstandsdatenvorspeicher 88, einem dritten Abstandsdatenvorspeicher 89 und einem vierten Abstandsdatenvorspeicher 90 einspeisbar sind. In den Abstandsdatenvorspeichern 87, 88, 89, 90 sind die aus den zugeordneten Abstandsmesseinheiten 14, 15, 16, 17 stammenden, mit den Zusatzinformationen betreffend die Mastenanordnung ergänzten Abstandssignale in dem Waggonkoordinatensystem 38 abspeicherbar.

Die Ausgangssignale der ersten Flächenkamera 23 und der zweiten Flächenkamera 25 der Referenzlagenmesseinheit 20 sind dem Schnittlinienbildauswertemodul 25 zum Auswerten der Schnittlinienbilder 29, 30 einspeisbar. Das Schnittlinienbildauswertemodul 25 verfügt über ein Bildauswerteglied 91 mit einem ersten Seitenlagengenerator 92 und mit einem ersten Höhenlagengenerator 93, die mit der ersten Flächenkamera 23 verbunden sind. Weiterhin ist das Bildauswerteglied 91 mit einem zweiten Seitenlagengenerator 94 und mit einem zweiten Höhenlagengenerator 95 ausgestattet, mit denen jeweils die der jeweiligen Schiene 2, 3 zugeordneten Referenzseitenlagen 32, 34 beziehungsweise Referenzhöhenlagen 31, 33 bestimmbar sind.

Die dem siebten Ausgangssignal 73, dem achten Ausgangssignal 74, dem neunten Ausgangssignal 75 und dem zehnten Ausgangssignal 76 gemäß Fig. 6 entsprechenden Ausgangssignale der Seitenlagengeneratoren 92, 94 beziehungsweise der Höhenlagengeneratoren 93, 95 sind einem Referenzlagenpositionsgeber 96 des Schnittlinienbildauswertemodul 25 einspeisbar, dem weiterhin das Wegsignal aus dem Wegsignalgeber 19 zuführbar ist. Mit dem Referenzlagenpositionsgeber 96 ist die jeweilige Position des Waggonkastens 1 in dem Schienenkoordinatensystem 35 bestimmbar.

Das der jeweiligen Position des Waggonkastens 1 in dem Schienenkoordinatensystem 35 zugeordnete Ausgangssignal des Referenzlagenpositionsgebers 96 ist einem ersten Koordinatenkorrekturglied 97 und einem zweiten Koordinatenkorrekturglied 98 eines Korrekturmoduls 99 einspeisbar. Dem ersten Koordinatenkorrekturglied 97 sind weiterhin die Daten des ersten Abstandsdatenvorspeichers 87 und des zweiten Abstandsdatenvorspeichers 88 einspeisbar, während dem zweiten Koordinatenkorrekturglied 98 die Daten des dritten Abstandsdatenvorspeichers 89 und des vierten Abstandsdatenvorspeichers 90 zuführbar sind.

Mit den Koordinatenkorrekturgliedern 97, 98 des Korrekturmoduls 99 sind die bislang in dem Waggonkoordinatensystem 38 vorliegenden Abstandswerte in das Schienenkoordinatensystem 35 und damit insbesondere auf die aus den Referenzhöhenlagen 31, 33 gewonnene Ebene der Schienen 2, 3 und auf eine der Referenzseitenlagen 32, 34 oder einer Ableitung hiervon wie die Mittellage zwischen den Referenzseitenlagen 32, 34 bezogen umrechenbar. Den Koordinatenkorrekturgliedern 97, 98 sind ein erster Messdatenzwischenspeicher 100 beziehungsweise ein zweiter Messdatenzwischenspeicher 101 nachgeordnet, in denen die korrigierten Abstandswerte abspeicherbar sind.

Der Ausgang des ersten Messdatenzwischenspeichers 100 liegt zum einen an einem ersten Schienenkoordinatenergebnisspeicher 102, in dem die seitlich der ersten Schiene 2 aufgenommenen Abstandswerte in Schienenkoordinaten beispielsweise zur Weiterverarbeitung und/oder Visualisierung abspeicherbar sind. Der Ausgang des ersten Messdatenzwischenspeichers 100 ist weiterhin mit einem ersten Bezugskorrekturglied 103 verbunden, das weiterhin an die Neigungsmesseinheit 18 angeschlossen ist. Mit dem ersten Bezugskorrekturglied 103 sind die bislang in Schienenkoordinaten vorliegenden Abstandswerte in Horizontalwerte, also Werte rechtwinklig zu der Schwerkraft, umrechenbar. Die mittels des ersten Bezugskorrekturgliedes 103 umgerechneten Abstandswerte sind einem ersten Schwerkraftkoordinatenergebnisspeicher 104 ebenfalls zur Weiterbearbeitung und/oder Visualisierung einspeisbar.

Entsprechend liegt der Ausgang des zweiten Messdatenzwischenspeichers 101 zum einen an einem zweiten Schienenkoordinatenergebnisspeicher 105, in dem die seitlich der zweiten Schiene 3 aufgenommenen Abstandswerte in Schienenkoordinaten beispielsweise zur Weiterverarbeitung und/oder Visualisierung abspeicherbar sind. Der Ausgang des zweiten Messdatenzwischenspeichers 101 ist weiterhin mit einem zweiten Bezugskorrekturglied 106 verbunden, das ebenfalls weiterhin an die Neigungsmesseinheit 18 angeschlossen ist. Mit dem zweiten Bezugskorrekturglied 106 sind die bislang in Schienenkoordinaten vorliegenden Abstandswerte in Horizontalwerte, also Werte rechtwinklig zu der Schwerkraft, umrechenbar. Die mittels des zweiten Bezugskorrekturgliedes 106 umgerechneten Abstandswerte sind einem zweiten Schwerkraftkoordinatenergebnisspeicher 107 ebenfalls zur Weiterbearbeitung und/oder Visualisierung einspeisbar.

Somit liegen in den Schienenkoordinatenergebnisspeichern 102, 104 die Abstandswerte in dem Schienenkoordinatensystem 35 als linksseitige und rechtsseitige Abstandsprofile vor, so dass insbesondere ein sich entlang des zurückgelegten Weges durch die seitliche Hin- und Herbewegung des Waggonkastens 1 sich ändernder seitlicher Versatzweg 44 des Waggonkastens 1 korrigiert ist und die Abstandswerte, wie von einigen Eisenbahngesellschaften gefordert, bezogen auf die Ebene der Schienen 2, 3 vorliegen.

In den Schwerkraftkoordinatenergebnisspeichern 104, 107 wiederum liegen die Abstandswerte in dem Schwerkraftkoordinatensystem 38 als linksseitige und rechtsseitige Abstandsprofile vor, so dass auch in diesem schienenunabhängigen Koordinatensystem die seitliche Hin-und Herbewegung des Waggonkastens 1 kompensiert ist und die Abstandswerte, wie von anderen Eisenbahngesellschaften gefordert, bezogen auf die Schwerkraft vorliegen.

## Patentansprüche

1. Vorrichtung zum berührungslosen Erfassen von Abständen zu Gegenständen, die seitlich einer Schienen (2, 3) aufweisenden Gleisanlage (4) angeordnet sind, mit einem Wegsignalgeber (19) zum Erzeugen eines für einen zurückgelegten Weg charakteristischen Wegsignals (66), mit wenigstens einer Abstandsmesseinheit (14, 15, 16, 17) zum Erzeugen eines für den seitlichen Abstand der oder jeder Abstandsmesseinheit (14, 15, 16, 17) zu Gegenständen (45, 46, 48, 49, 51, 52) charakteristischen Abstandssignals (61, 62, 63, 64), mit einer Neigungsmesseinheit (18) zum Erzeugen eines von für die Neigung der oder jeder Abstandsmesseinheit (14, 15, 16, 17) gegenüber der Schwerkraft charakteristischen Neigungssignals (77) und mit einer Recheneinheit, mit der auf der Grundlage des Wegsignals (66), des oder jedes Abstandssignals (61, 62, 63, 64) und des Neigungssignals (77) für einen zurückgelegten Weg ein Abstandsprofil erzeugbar ist, **dadurch gekennzeichnet, dass** eine Referenzlagenmesseinheit (20) vorhanden ist, mit der wenigstens ein für die Lage der oder jeder Abstandsmesseinheit (14, 15, 16, 17) in Bezug auf eine schienengebundene Referenzlage charakteristisches Referenzlagensignal (73, 74, 75, 76) erzeugbar ist, und dass ein Korrekturmodul (99) vorhanden ist, mit dem das oder jedes Abstandssignal (61, 62, 63, 64) mit dem oder jedem Referenzlagensignal (73, 74, 75, 76) zu einem zugehörigen schienenbezogenen Referenzabstandssignal umrechenbar ist.

2. Vorrichtung nach Anspruch 1, **dadurch gekennzeichnet, dass** die Referenzlagenmesseinheit (20) wenigstens einen Strahlungsliniengenerator (21, 23) mit einer Strahlungsquelle aufweist, mit der ein Schienenkopf (26) einer Schiene (2, 3) mit einer linienhaften ausgebildeten, vorzugsweise rechtwinklig zu dem betreffenden Schienenkopf (26) ausgerichteten Strahlung beaufschlagbar ist.

3. Vorrichtung nach Anspruch 2, **dadurch gekennzeichnet, dass** die Strahlungsquelle ein Laser ist.

4. Vorrichtung nach Anspruch 2 oder Anspruch 3, **dadurch gekennzeichnet, dass** die Referenzlagenmesseinheit (20) wenigstens eine Flächenkamera (22, 24) aufweist, mit der die von einem Schienenkopf (26) rückgeworfene Strahlung als Schnittlinienbild (29, 30) ortsaufgelöst erfassbar ist.

5. Vorrichtung nach Anspruch 4, **dadurch gekennzeichnet, dass** ein Schnittlinienbildauswertemodul (25) vorhanden ist, mit dem aus den Schnittlinienbildern (29, 30) jeder Flächenkamera (22, 24) jeweils ein Wert für eine Referenzseitenlage (32, 34) und eine Referenzhöhenlage (31, 33) der zugeordneten Schiene (2, 3) erzeugbar ist.

6. Vorrichtung nach Anspruch 5, **dadurch gekennzeichnet, dass** zwei Flächenkameras (22, 24) zum Erfassen von Schnittlinienbildern (29, 30) von zwei Schienen (2, 3) einer Gleisanlage (4) vorhanden sind und dass mit dem Schnittlinienbildauswertemodul (25) aus den Referenzseitenlagen (32, 34) der beiden Schienen (2, 3) eine zwischen den Referenzseitenlagen (32, 34) liegende Mittellage als Referenzlage bestimmbar ist.

7. Vorrichtung nach Anspruch 5 oder Anspruch 6, **dadurch gekennzeichnet, dass** ein Referenzlagenpositionsgeber (96) vorhanden ist, der zum Erzeugen des oder jedes Referenzlagensignals mit einem an die oder jeder Flächenkamera (22, 24) angeschlossenen Bildauswerteglied (91) und zum Erzeugen des oder jedes Referenzabstandssignals mit dem Korrekturmodul (99) verbunden ist.

8. Vorrichtung nach einem der Ansprüche 1 bis 7, **dadurch gekennzeichnet, dass** wenigstens zwei in unterschiedlichen Höhen angeordnete Abstandsmesseinheiten (14, 15; 16, 17) vorhanden sind, die zu einer Seite einer Schiene (2, 3) ausgerichtet sind.

9. Vorrichtung nach einem der Ansprüche 1 bis 8, **dadurch gekennzeichnet, dass** eine Mastauslegerdetektionsanordnung (10, 11, 12) vorhanden ist, mit der entlang des zurückgelegten Weges das Vorhandensein von Mastauslegern (7, 9, 47, 50, 53) erfassbar ist.

10. Vorrichtung nach Anspruch 9, **dadurch gekennzeichnet, dass** die Mastauslegerdetektionsanordnung (10, 11, 12) einen Mastenanordnungssignalgenerator (12) aufweist, mit dem für unterschiedliche Typen von Masten (6, 8, 45, 46, 49, 52) ein Mastenanordnungssignal (65) mit jeweils für einen Typ charakteristischen Signaleigenschaften erzeugbar sind.
